# EUROPÄISCHE PATENTANMELDUNG

(11) **EP 1 610 073 A2**
(43) Veröffentlichungstag der Anmeldung: **28.12.2005**
(21) Anmeldenummer: 05012940.2
(22) Anmeldetag: 16.06.2005
(51) Int. Cl.: F24J 2/07

(54) **Solarstrahlungsempfänger und Verfahren zur Kühlung eines Eintrittsfensters eines Solarstrahlungsempfängers**

(30) Priorität: 22.06.2004 DE 102004031917
(71) Anmelder: Deutsches Zentrum für Luft- und Raumfahrt e.V., 53175 Bonn (DE)
(72) Erfinder: Buck, Reiner Dr., 70563 Stuttgart (DE); Uhlig, Ralf, 70567 Stuttgart (DE); Röger, Marc, 70197 Stuttgart (DE)
(74) Vertreter: Hoeger, Stellrecht & Partner Patentanwälte

(57) **Zusammenfassung**

Um Solarstrahlungsempfänger, umfassend einen Druckkessel (12) und einen in dem Druckkessel (12) angeordneten Absorber (20) für Solarstrahlung, wobei ein Arbeitsmedium durch den Druckkessel (12) zur Wärmeaufnahme am Absorber (20) führbar ist, und ein am Druckkessel (12) angeordnetes Eintrittsfenster (24,100,114) für die Solarstrahlung, bereitzustellen, bei dem die Wärmebelastung des Eintrittsfensters (24) minimiert ist, ist vorgesehen, daß zwischen dem Eintrittsfenster (24) und dem Absorber (20) eine Infrarotstrahlungsschildeinrichtung (34) angeordnet ist, welche für Solarstrahlung durchlässig ist und welche vom Absorber (20) ausgehende Infrarotstrahlung abfängt und daß die Infrarotstrahlungsschildeinrichtung (34) so angeordnet und ausgebildet ist, daß vom Absorber (20) ausgehende Infrarotstrahlung vom Eintrittsfenster (24) abgeschirmt ist, um den Wärmeeintrag an das Eintrittsfenster (24) von dem Innenraum des Druckkessels (12) her zu verringern.

## Beschreibung

Die Erfindung betrifft einen Solarstrahlungsempfänger, umfassend einen Druckkessel und einen in dem Druckkessel angeordneten Absorber für Solarstrahlung, wobei ein Arbeitsmedium durch den Druckkessel zur Wärmeaufnahme am Absorber führbar ist, und ein am Druckkessel angeordnetes Eintrittsfenster für die Solarstrahlung.

Die Erfindung betrifft ferner ein Verfahren zur Kühlung eines Eintrittsfensters eines Solarstrahlungsempfängers, welcher einen mit Solarstrahlung beaufschlagbaren Absorber aufweist.

Solarstrahlungsempfänger dienen dazu, solarthermisch erzeugte Wärme an ein gasförmiges Arbeitsmedium wie Luft weiterzugeben. Bei einem geschlossenen Solarstrahlungsempfänger ist in einem Druckkessel ein Absorber angeordnet, welcher solarthermisch aufgeheizt wird. Die Strahlung tritt durch das Eintrittsfenster, welches insbesondere gewölbt ist, in den Druckkessel. Dieses Eintrittsfenster ist grundsätzlich einer hohen Wärmebelastung ausgesetzt.

Solarstrahlungsempfänger sind beispielsweise in der DE 197 10 986 A1 und der DE 100 20 322 A1 beschrieben.

Aus der US 4,135,489 ist ein Solar-Energiekonversionssystem bekannt, welches einen Absorber aufweist. Es ist eine Drei-Fenster-Konfiguration vorgesehen, wobei ein Fenster als "Diode" wirkt, welche Infrarotstrahlung zurück zu dem Absorber reflektiert.

Der Erfindung liegt die Aufgabe zugrunde, einen Solarstrahlungsempfänger bereitzustellen, bei dem die Wärmebelastung des Eintrittsfensters minimiert ist.

Diese Aufgabe wird bei dem eingangs genannten Solarstrahlungsempfänger erfindungsgemäß dadurch gelöst, daß zwischen dem Eintrittsfenster und dem Absorber eine Infrarotstrahlungsschildeinrichtung angeordnet ist, welche für Solarstrahlung durchlässig ist und welche vom Absorber ausgehende Infrarotstrahlung abfängt und daß die Infrarotstrahlungsschildeinrichtung so angeordnet und ausgebildet ist, daß vom Absorber ausgehende Infrarotstrahlung vom Eintrittsfenster abgeschirmt ist, um den Wärmeeintrag an das Eintrittsfenster von dem Innenraum des Druckkessels her zu verringern.

Es hat sich gezeigt, daß der Hauptteil der Wärmebelastung des Eintrittsfensters von Infrarotstrahlung kommt, die vom Absorber aufgrund dessen Aufheizung durch Solarstrahlung emittiert wird. Durch die Infrarotstrahlungsschildeinrichtung läßt sich das Eintrittsfenster zumindest partiell gegenüber dieser Infrarotstrahlung abschirmen.

Die in dem Druckkessel angeordnete Infrarotstrahlungsschildeinrichtung ist opak für die Infrarotstrahlung des Absorbers und transparent für die Solarstrahlung. Dadurch ist sichergestellt, daß Solarstrahlung, welche durch das Eintrittsfenster in den Druckkessel tritt, den Absorber aufheizen kann.

Durchlässigkeit für Solarstrahlung ist dabei so zu verstehen, daß ein wesentlicher Teil der durch das Eintrittsfenster eintretenden Solarstrahlung den Absorber erreicht. Opak ist so zu verstehen, daß ein wesentlicher Teil der vom Absorber kommenden Infrarotstrahlung bezogen auf das Eintrittsfenster abgefangen wird.

Durch die erfindungsgemäße Lösung ist der Wärmeeintrag an das Eintrittsfenster von dem Innenraum des Druckkessels her stark verringert. Dadurch wird das Entstehen eines hohen Temperaturgradienten über die Wandstärke des Eintrittsfensters verhindert. Dadurch wiederum lassen sich mechanische Spannungen im Eintrittsfenster verringern.

Aufgrund geringerer Abstrahlungsverluste und Konvektionsverluste am Eintrittsfenster läßt sich der Wirkungsgrad des Solarstrahlungsempfängers erhöhen.

Weiterhin sind höhere Auslaßtemperaturen für den Solarstrahlungsempfänger möglich, so daß der Wirkungsgrad verbessert werden kann.

Durch die erfindungsgemäße Lösung läßt sich eine Funktionstrennung bezüglich des Eintrittsfensters durchführen; das Eintrittsfenster ist drucktragend. Die Infrarotstrahlungsschildeinrichtung ist derjenige Teil des Solarstrahlungsempfängers, welcher der stärksten Wärmebelastung ausgesetzt ist. Diese Wärmebelastung wird von dem Eintrittsfenster abgenommen.

Es ist dabei auch grundsätzlich möglich, daß die Infrarotstrahlungsschildeinrichtung als Absorber bzw. Vorabsorber dient, durch den sich Arbeitsmedium aufheizen läßt.

Es kann eine Kühlungsfluidströmung vorgesehen sein (wobei das Kühlungsfluid Arbeitsmedium sein kann), über die sich das Eintrittsfenster und die Infrarotstrahlungsschildeinrichtung kühlen lassen, wobei das aufgeheizte Kühlungsfluid als Arbeitsmedium eingesetzt werden kann.

Insbesondere ist die Infrarotstrahlungsschildeinrichtung so angeordnet und ausgebildet, daß vom Absorber ausgehende Infrarotstrahlung vom Eintrittsfenster abgeschirmt ist. Dadurch ist die Wärmebelastung des Eintrittsfensters aufgrund Infrarotstrahlung, welche vom Absorber ausgeht, stark verringert.

Ganz besonders vorteilhaft ist es, wenn die Infrarotstrahlungsschildeinrichtung so angeordnet und ausgebildet ist, daß vom Absorber ausgehende Infrarotstrahlung bezogen auf die Gesamtfläche des Eintrittsfensters abgefangen wird. Dadurch läßt sich eine Infrarotstrahlungsbeaufschlagung des Eintrittsfensters über dessen gesamte Innenseite, welche in einem Innenraum des Druckkessels liegt, verhindern oder zumindest stark verringern.

Üblicherweise werden Eintrittsfenster aus Quarzglas hergestellt. Bei hohen Temperaturen tritt dabei das Problem der Entglasung durch Kristallitbildung auf. Durch die erfindungsgemäße Lösung läßt sich das Eintrittsfenster effektiv kühlen, zumindest in dem Sinne, daß Infrarotstrahlung vom Eintrittsfenster abgeschirmt wird. Dadurch läßt sich die Temperatur des Eintrittsfensters unterhalb einer Temperatur von ca. 800°C bis 850°C halten. Entglasungsvorgänge sind bei diesen Temperaturen relativ langsam, d. h. finden nicht beschleunigt statt.

Günstig ist es, wenn die Infrarotstrahlungsschildeinrichtung aus Quarzglas hergestellt ist. Quarzglas ist durchgängig für Solarstrahlung und absorbiert Infrarotstrahlung. Dies ist gerade das Problem, wenn Infrarotstrahlung vom Absorber auf das Eintrittsfenster aus Quarzglas gelangt, da sich dieses aufgrund der absorbierten Infrarotstrahlung aufheizt. Wenn die Infrarotstrahlungsschildeinrichtung aus Quarzglas hergestellt ist, dann absorbiert diese vom Absorber ausgehende Infrarotstrahlung, während sie Solarstrahlung zum Absorber durchläßt. Die absorbierte Infrarotstrahlung, die zu einer Aufheizung der Infrarotstrahlungsschildeinrichtung führt, gelangt dann nicht mehr zum Eintrittsfenster, so daß dieses weniger stark thermisch belastet ist.

In Kombination mit der Infrarotstrahlungsschildeinrichtung oder unabhängig davon ist es günstig, wenn eine Kühlungseinrichtung zur Kühlung des Eintrittsfensters an einer dem Absorber zugewandten Innenseite vorgesehen ist. Durch die Kühlungseinrichtung läßt sich die Temperatur des Eintrittsfensters so niedrig halten, daß Entglasungsvorgänge mit sehr kleiner Rate stattfinden. Durch die Kühlungseinrichtung läßt sich ferner die Infrarotstrahlungsschildeinrichtung kühlen.

Beispielsweise ist eine Anströmung der Innenseite des Eintrittsfensters mit Kühlungsfluid vorgesehen. Als Kühlungsfluid wird vorzugsweise Luft eingesetzt. Das Kühlungsfluid kann einer Strömungsführung für Arbeitsmedium abgezweigt werden, wobei eine Abzweigung innerhalb des Druckkessels oder außerhalb des Druckkessels grundsätzlich möglich ist.

Es kann vorgesehen sein, daß zwischen dem Eintrittsfenster und der Infrarotstrahlungsschildeinrichtung ein Spalt gebildet ist, durch den Kühlungsfluid führbar ist. Kühlungsfluid, welches diesen Spalt durchströmt und dabei die Innenseite des Eintrittsfensters beaufschlägt, führt Wärme vom Eintrittsfenster ab, d. h. kühlt dieses. Durch das Kühlungsfluid kann ferner Wärme von der Infrarotstrahlungsschildeinrichtung abgeführt werden und diese gekühlt werden.

Bei einem Ausführungsbeispiel ist in der Infrarotstrahlungsschildeinrichtung mindestens eine Öffnung vorgesehen, durch die Kühlungsfluid aus dem Spalt zum Absorber strömen kann. Das Kühlungsfluid kann sich dann mit dem Arbeitsmedium im Druckkessel mischen, so daß der Kühlungsfluidstrom ein Teilstrom des Arbeitsmediumstroms ist. Das Kühlungsfluid wird in dem Spalt aufgeheizt und aufgeheiztes Kühlungsfluid wird dann dem Absorber zugeführt. In diesem Sinne ist die Infrarotstrahlungsschildeinrichtung ein Vorabsorber, da dort Kühlungsfluid als Arbeitsmedium vorgeheizt wird.

Es ist dabei grundsätzlich möglich, daß eine Mehrzahl von Öffnungen in der Infrarotstrahlungsschildeinrichtung angeordnet sind, welche insbesondere gleichmäßig über diese verteilt sind. Es ist auch möglich, daß beispielsweise nur eine einzige Öffnung vorgesehen ist.

Bei einer Variante einer Ausführungsform ist eine Öffnung in einem Scheitelbereich der Infrarotstrahlungsschildeinrichtung bezogen auf das Eintrittsfenster angeordnet. Über diese Öffnung kann aufgeheiztes Kühlungsfluid dem Absorber zuströmen. Kühlungsfluid läßt sich dann in den Spalt in einen Fußbereich einkoppeln und aus dem Scheitelbereich aus dem Spalt abführen. Dadurch läßt sich eine gute homogene Kühlwirkung erzielen; bei der Einkopplung in den Fußbereich des Spalts ist das Kühlungsfluid noch kühl und weist bei bestimmten Betriebsbedingungen eine geringere Geschwindigkeit auf. Wenn das Kühlungsfluid den Scheitelbereich erreicht, dann ist es aufgeheizt. Durch eine höhere Geschwindigkeit im Scheitelbereich (aufgrund Querschnittsverringerung im Spalt) ist die Geschwindigkeit bei bestimmten Betriebsbedingungen dort höher, so daß sich über den gesamten Spaltbereich eine gleichmäßige Kühlungswirkung ergibt.

Insbesondere ist die Öffnung koaxial zu einer Achse des Eintrittsfensters ausgerichtet. Dadurch lassen sich symmetrische Verhältnisse erzielen, so daß eine räumlich homogene Kühlwirkung gewährleistbar ist.

Bei einer weiteren Variante einer Ausführungsform ist die Infrarotstrahlungsschildeinrichtung mit einer Mehrzahl von Öffnungen versehen, so daß Kühlungsfluid aus dem Spalt über einen großen Flächenbereich der Infrarotstrahlungsschildeinrichtung zum Absorber strömen kann. Bei dieser Variante läßt sich eine gleichmäßige Durchströmung der Infrarotstrahlungsschildeinrichtung erzielen, um so eine gleichmäßige Kühlwirkung zu erzielen und eine gleichmäßige Aufheizung des Kühlungsfluids (welches dann als Arbeitsmedium eingesetzt werden kann) zu erzielen. Die Infrarotstrahlungsschildeinrichtung läßt sich so effektiv als Vorabsorber einsetzen. Weiterhin läßt sich so die Ausbildung von Staupunkten verhindern.

Grundsätzlich kann eine Einkopplung von Kühlungsfluid in den Spalt in einem Fußbereich des Spalts vorgesehen sein. Dadurch kann sich mindestens bei bestimmten Betriebsbedingungen eine homogene Kühlwirkung ergeben, wenn im Fußbereich des Spalts das noch kühle Kühlungsfluid eine geringe Geschwindigkeit aufweist und im Scheitelbereich das aufgeheizte Kühlungsfluid eine höhere Geschwindigkeit aufweist.

Es kann alternativ auch eine Einkopplung von Kühlungsfluid in einen Scheitelbereich des Spalts vorgesehen sein.

Günstig ist es, wenn dem Spalt eine Dralleinrichtung zur Verdrallung von in dem Spalt strömenden Kühlungsfluid zugeordnet ist. Durch die Verdrallung läßt sich der Wärmeübergang von den Spalt begrenzenden Wänden (des Eintrittsfensters und der Infrarotstrahlungsschildeinrichtung) auf das Kühlungsfluid verbessern. Eine solche Dralleinrichtung läßt sich auf einfache Weise herstellen und in den Strahlungsempfänger integrieren. Vorzugsweise ist dabei die Dralleinrichtung in der Nähe eines Einkopplungsbereichs von Kühlungsfluid in den Spalt angeordnet. Eine solche Dralleinrichtung läßt sich auf einfache Weise herstellen und insbesondere muß der Spalt selber als Zwischenraum zwischen dem Eintrittsfenster und der Infrarotstrahlungsschildeinrichtung nicht modifiziert werden.

Es kann auch günstig sein, wenn dem Spalt eine Einrichtung zur Erzeugung von Schwingungen in der Kühlungsfluidströmung im Spalt zugeordnet ist. Es kann grundsätzlich das Problem entstehen, daß sich ein oder mehrere Staupunkte ausbilden. Ein Staupunkt bildet sich vorzugsweise im Scheitelbereich des Eintrittsfensters aus. An der Stelle eines Staupunkts ist das Eintrittsfenster stärker thermisch belastet und insbesondere punktuell belastet. Wenn der Kühlungsfluidströmung eine Schwingung bzw. Oszillation überlagert wird, dann läßt sich ein solcher Staupunkt zumindest oszillierend verschieben, so daß nicht eine einzige Stelle des Eintrittsfensters punktuell belastet wird. Die mittlere Belastung ist dann verringert.

Beispielsweise umfaßt die Einrichtung zur Erzeugung von Schwingungen eine Abdeckung, mit der periodisch die Einkopplung von Kühlungsfluid in den Spalt freigebbar ist. Über entsprechende Steuerung der Abdeckung und insbesondere Bewegung der Abdeckung läßt sich periodisch Kühlungsfluid einkoppeln und dadurch der Kühlungsfluidströmung eine Schwingung bzw. Oszillation überlagern.

Beispielsweise umfaßt die Einrichtung zur Erzeugung von Schwingungen ein Band mit Öffnungen, welches in einem Fußbereich des Spalts drehbar oder oszillierbar angeordnet ist. Wenn die Öffnungen Einlaßkanälen gegenüberliegen, dann ist die Einlaßströmung von Kühlungsfluid in den Spalt freigegeben. Ansonsten sind die Einlaßmündungen abgedeckt. Durch Oszillation bzw. Drehung des Bands erfolgt eine periodische Freigabe, welche zu einer Schwingungsüberlagerung führt.

Bei einem Ausführungsbeispiel ist an oder in der Nähe der Innenseite des Eintrittsfensters eine Rohreinrichtung angeordnet, in welcher Kühlungsfluid strömt. Über das in der Rohreinrichtung strömende Kühlungsfluid läßt sich die Rohreinrichtung selber und das Eintrittsfenster kühlen. In der Rohreinrichtung läßt sich die Kühlungsfluidströmung "fangen". Dadurch läßt sich ein Austritt von Kühlungsfluid in den Innenraum des Druckkessels verhindern. Es ist aber auch grundsätzlich möglich, daß die Rohreinrichtung mit Öffnungen versehen ist, über die Kühlungsfluid der Innenseite des Eintrittsfensters zuströmen kann.

Bei einer Ausführungsform ist eine Freistrahleinrichtung vorgesehen, über welche die Innenseite des Eintrittsfensters mit Kühlungsfluid-Freistrahlen beaufschlagbar ist. Dadurch läßt sich das Eintrittsfenster kühlen. Die Kühlung erfolgt dabei von einem Innenraum des Druckkessels her. Von diesem Innenraum her ist das Eintrittsfenster auch am stärksten wärmebelastet. Es wird dann die Ausbildung eines großen Temperaturgradienten über die Wand des Eintrittsfensters entgegengewirkt.

Beispielsweise umfaßt die Freistrahleinrichtung eine Mehrzahl von Düsen, deren Mündungsöffnung der Innenseite des Eintrittsfensters zugewandt sind. Das Eintrittsfenster läßt sich dadurch mit den Freistrahlen an Kühlungsfluid beaufschlagen. Die Düsen sind dabei vorzugsweise in einem Durchbruch des Absorbers angeordnet bzw. werden über solche Durchbrüche mit Kühlungsfluid versorgt.

Es kann auch vorgesehen sein, daß die Freistrahleinrichtung eine Mehrzahl von Rohren umfaßt, welche Düsenöffnungen aufweisen. Die Rohre sind insbesondere transparent. In diese Rohre wird Kühlungsfluid eingekoppelt, welches dann aus diesen austreten kann und als Freistrahl das Eintrittsfenster beaufschlagen kann. Die Rohre müssen nicht unbedingt als Infrarotstrahlungsschildeinrichtung für das Eintrittsfenster ausgebildet sein.

Vorzugsweise sind die Rohre fächerförmig an oder in der Nähe der Innenseite des Eintrittsfensters angeordnet, um eine gleichmäßige Freistrahlbeaufschlagung der Innenseite des Eintrittsfensters zu erreichen.

Es kann vorgesehen sein, daß eine Kühlungsfluidführung an eine Strömungsführung für Arbeitsmedium in dem Druckkessel gekoppelt ist. Ein Kühlungsfluidstrom ist dann ein Teilstrom des Arbeitsmediumstroms.

Es ist dabei grundsätzlich möglich, daß eine Abführung für Kühlungsfluid an die Strömungsführung für Arbeitsmedium gekoppelt ist. Aufgeheiztes Kühlungsfluid läßt sich dann als Arbeitsmedium einsetzen.

Es ist auch möglich, daß eine Zuführung für Kühlungsfluid an die Strömungsführung für Arbeitsmedium gekoppelt ist. Es läßt sich dann Arbeitsmedium und insbesondere noch nicht aufgeheiztes Arbeitsmedium als Kühlungsfluid einsetzen.

Bei einer Ausführungsform ist die Infrarotstrahlungsschildeinrichtung als zusammenhängendes Schildfenster ausgebildet, welches zwischen dem Eintrittsfenster und dem Absorber angeordnet ist. Das Schildfenster bildet ein Kühlfenster, welches die Infrarotstrahlung vom Eintrittsfenster abschirmt. Das Schildfenster ist in dem Innenraum des Druckkessels angeordnet und über das Eintrittsfenster gesetzt.

Es kann vorgesehen sein, daß die Infrarotstrahlungsschildeinrichtung einstückig ausgebildet ist oder aus einer Mehrzahl von Segmenten zusammengesetzt ist. Da das Schildfenster kein drucktragendes Teil ist (es ist im Innenraum des Solarstrahlungsempfängers angeordnet), ist es weniger starken Belastungen ausgesetzt bzw. die Folgen eines Bruchs des Schildfensters sind gegenüber den Folgen eines Bruchs des Eintrittsfensters weniger schlimm.

Beispielsweise sind das Eintrittsfenster und das Schildfenster gleichmäßig beabstandet angeordnet und ausgebildet. Ein Spalt zwischen dem Eintrittsfenster und dem Schildfenster hat dann über den gesamten Bereich des Eintrittsfenster eine gleichmäßige Dicke.

Bei einem weiteren Ausführungsbeispiel umfaßt die Infrarotstrahlungsschildeinrichtung ein für Solarstrahlung transparentes Rohr oder eine Mehrzahl von transparenten Rohren, welche zwischen dem Eintrittsfenster und dem Absorber angeordnet sind. In den Rohren selber läßt sich Kühlungsfluid führen. Die Rohre sind durchlässig für Solarstrahlung und absorbieren Infrarotstrahlung.

Es kann dabei vorgesehen sein, daß das oder die Rohre um das Eintrittsfenster bezogen auf eine Achse des Eintrittsfensters liegen. Dadurch läßt sich Infrarotstrahlung vom Absorber vom Eintrittsfenster abschirmen und weiterhin läßt sich eine gleichmäßige (passive) Kühlungswirkung für das Eintrittsfenster erreichen.

Es ist grundsätzlich vorgesehen, daß das Kühlungsfluid in den Rohren "gefangen" strömt. Dadurch lassen sich die Rohre kühlen. Es ist aber auch denkbar, daß das oder die Rohre mit der Innenwand des Eintrittsfensters zugewandten Öffnungen versehen sind. Durch diese kann dann Kühlungsfluid austreten und die Innenseite des Eintrittsfensters beaufschlagen. Es lassen sich dann die Rohre und das Eintrittsfenster kühlen.

Günstig ist es, wenn mittels Sammelrohren und/oder Verteilerrohren eine Rohrstruktur gebildet ist. Über die Sammelrohre/Verteilerrohre läßt sich Kühlungsfluid abführen bzw. zuführen. Diese können so angeordnet sein, daß sie ein Gerüst für die Rohre bilden und damit eine Rohrstruktur-Einheit bilden, welche beispielsweise haubenförmig ausgestaltet ist.

Bei einer weiteren Ausführungsform ist die Infrarotstrahlungsschildeinrichtung als poröse Struktur ausgebildet, welche für Solarstrahlung durchlässig ist und für Infrarotstrahlung opak ist. Durch die poröse Struktur läßt sich über einen großen Flächenbereich Kühlungsfluid abführen.

Insbesondere ist die Infrarotstrahlungsschildeinrichtung dann aus einem transparenten Material hergestellt. Beispielsweise ist die Infrarotstrahlungsschildeinrichtung aus (Glas-)Fasern und/oder (Glas-)Hohlkörpern hergestellt.

Die poröse Struktur kann als Gewebe oder Gewirke ausgebildet sein, um eine Infrarotstrahlungsschildeinrichtung bereitzustellen, durch die Kühlungsfluid strömen kann (über die "Poren"), welche Infrarotstrahlung absorbiert und welche Solarstrahlung zum Absorber durchläßt.

Insbesondere ist die Infrarotstrahlungsschildeinrichtung als Absorber bzw. Vorabsorber für Infrarotstrahlung ausgebildet. Ein Kühlungsfluid läßt sich dann aufheizen und als Arbeitsmedium weiter einsetzen. Das Kühlungsfluid als Arbeitsmedium wird dem Absorber zur endgültigen Aufheizung zugeführt.

Der Erfindung liegt ferner die Aufgabe zugrunde, ein Verfahren der eingangs genannten Art so zu verbessern, daß die Wärmebeaufschlagung des Eintrittsfensters verringert ist.

Diese Aufgabe wird bei dem eingangs genannten Verfahren erfindungsgemäß dadurch gelöst, daß vom Absorber in Richtung Eintrittsfenster ausgehende Infrarotstrahlung abgefangen wird.

Das erfindungsgemäße Verfahren weist die bereits im Zusammenhang mit dem erfindungsgemäßen Solarstrahlungsempfänger geschilderten Vorteile auf.

Es handelt sich dabei um eine passive Kühlung.

Es kann zusätzlich oder alternativ auch eine aktive Kühlung vorgesehen sein, bei der das Eintrittsfenster an einer dem Absorber zugewandten Innenseite mittels Kühlungsfluid gekühlt wird. Es kann dabei eine direkte Kühlungsfluidbeaufschlagung der Innenseite erfolgen oder eine "gefangene" Kühlungsfluidströmung zur Wärmeabfuhr vorgesehen sein.

Bei einer Ausführungsform ist ein Kühlungsfluidstrom ein Teilstrom eines Stroms an Arbeitsmedium des Solarstrahlungsempfängers, wobei das Arbeitsmedium am Absorber Wärme aufnimmt.

Es kann auch vorgesehen sein, daß das Arbeitsmedium des Solarstrahlungsempfängers, welches am Absorber Wärme aufnimmt, als Kühlungsfluid eingesetzt wird. Vorzugsweise wird Arbeitsmedium als Kühlungsfluid eingesetzt, bevor dieses den Absorber durchströmt.

Grundsätzlich ist es möglich, daß ein Teilstrom an Arbeitsmedium in einer Infrarotstrahlungsschildeinrichtung vorgewärmt wird und diese damit als Vorabsorber dient. Es kann auch vorgesehen sein, daß der gesamte Arbeitsmediummassenstrom durch eine zwischen dem Eintrittsfenster und dem Absorber angeordnete Infrarotstrahlungsschildeinrichtung geführt wird, wobei beispielsweise eine poröse Struktur die Infrarotstrahlungsschildeinrichtung bildet. Der Massenstrom an Arbeitsmedium, welcher dem Absorber zugeführt wird, muß dann zuvor die Infrarotstrahlungsschildeinrichtung durchströmen. Das Arbeitsmedium kann dort Wärme aufnehmen, so daß die Infrarotstrahlungsschildeinrichtung als Vorabsorber dient. Solarstrahlungsempfängersysteme weisen üblicherweise eine Mehrzahl von Solarstrahlungsempfängern auf, wie beispielsweise ein Niedertemperaturmodul, ein Mitteltemperaturmodul und ein Hochtemperaturmodul. Wenn dafür gesorgt wird, daß das Arbeitsmedium die Infrarotstrahlungsschildeinrichtung vollständig durchströmt und dort Wärme aufnimmt, dann kann unter Umständen auf ein Mitteltemperaturmodul verzichtet werden.

Die nachfolgende Beschreibung bevorzugter Ausführungsbeispiele dient im Zusammenhang mit der Zeichnung der näheren Erläuterung der Erfindung. Es zeigen:
- Figur 1: eine Querschnittsdarstellung eines ersten Ausführungsbeispiels eines erfindungsgemäßen Solarstrahlungsempfängers;
- Figur 2: eine perspektivische Teildarstellung eines Ausführungsbeispiels eines Eintrittsfensters und eines Kühlfensters;
- Figur 3: eine vergrößerte Darstellung eines Einkopplungsbereichs für Kühlungsfluid bei dem Eintrittsfenster gemäß Figur 2;
- Figur 4: eine Schnittansicht eines zweiten Ausführungsbeispiels eines erfindungsgemäßen Solarstrahlungsempfängers;
- Figur 5: eine perspektivische Darstellung eines Ausführungsbeispiels einer Infrarotstrahlungsschildeinrichtung;
- Figur 6: eine Schnittdarstellung eines dritten Ausführungsbeispiels eines erfindungsgemäßen Solarstrahlungsempfängers;
- Figur 7: eine Teildarstellung (gezeigt sind ein Eintrittsfenster und teilweise ein Absorber) eines vierten Ausführungsbeispiels eines erfindungsgemäßen Solarstrahlungsempfängers und
- Figur 8: ein Eintrittsfenster in perspektivischer Ansicht und eine Kühlungseinrichtung bei einem fünften Ausführungsbeispiel eines erfindungsgemäßen Solarstrahlungsempfängers.

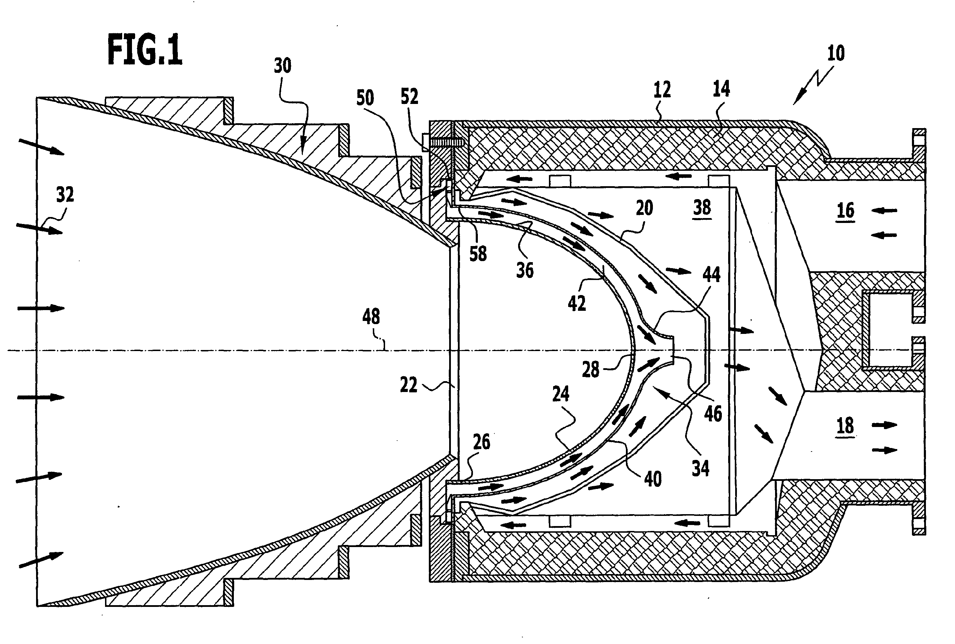

Ein erstes Ausführungsbeispiel eines erfindungsgemäßen Solarstrahlungsempfängers ist in Figur 1 gezeigt und dort als Ganzes mit 10 bezeichnet. Der Solarstrahlungsempfänger 10 ist beispielsweise als volumetrischer Solarstrahlungsempfänger ausgebildet. Er umfaßt einen Druckkessel 12 mit einer Innenisolierung 14. In dem Druckkessel 12 ist eine erste Strömungsführung 16 zur Zuführung von aufzuheizendem Gas (insbesondere Luft) gebildet. Ferner ist eine zweite Strömungsführung 18 zur Abführung von aufgeheiztem Gas (insbesondere Luft) gebildet.

In dem Druckkessel 12 ist ein Absorber 20 angeordnet. Das aufzuheizende Gas (Arbeitsmedium) wird dem Absorber 20 über die erste Strömungsführung 16 zugeführt und das Arbeitsmedium kann an dem Absorber 20 Wärme aufnehmen. Im Bereich des Absorbers 20 ist die erste Strömungsführung 16 so ausgebildet, daß der Absorber 20 flächig mit aufzuheizendem Gas beaufschlagbar ist. Das Arbeitsmedium kann den Absorber 20 zur Wärmeaufnahme durchströmen.

Arbeitsmedium, welches den Absorber 20 durchströmt hat, wird dann über die zweite Strömungsführung 18 abgeführt.

In dem Druckkessel 12 ist eine Öffnung 22 gebildet, an welcher ein Eintrittsfenster 24 angeordnet ist. Das Eintrittsfenster 24 ist gewölbt und insbesondere kuppelförmig ausgebildet mit einem Fußbereich 26 und einem Scheitelbereich 28. Durch das Eintrittsfenster 24, welches insbesondere aus Quarzglas hergestellt ist, kann (konzentrierte) Solarstrahlung in den Druckkessel 12 eintreten und den Absorber 20 aufheizen, um so wiederum das Arbeitsmedium aufheizen zu können. Der Absorber 20 ist dazu in dem Druckkessel 12 um das Eintrittsfenster 24 angeordnet, um eine flächige Solarstrahlungsbeaufschlagung des Absorbers 20 zu erreichen.

Bei der Durchführung des Arbeitsmediums durch den Druckkessel 12 steht dieses unter einem Druck, der beispielsweise in der Größenordnung von 7 bar oder 15 bar liegen kann. Das Eintrittsfenster 24 muß diesem Druck standhalten können. Im folgenden wird deshalb das Eintrittsfenster 24 auch als Druckfenster bezeichnet.

In der DE 100 20 322 A1 ist ein Strahlungsempfänger beschrieben, bei dem das Eintrittsfenster 24 mittels einer Lagervorrichtung an einer Druckkesselwand derart beweglich gelagert ist, daß mechanische Spannungen im Eintrittsfenster 24 durch Bewegung des Eintrittsfensters 24 relativ zu der Druckkesselwand abbaubar sind. Auf dieses Dokument wird ausdrücklich Bezug genommen.

In der DE 197 10 986 A1 ist ein Druckkessel 12 offenbart, bei welchem die erste Strömungsführung 16 (Einlaßstromführung) und die zweite Strömungsführung 18 (Auslaßstromführung) derart miteinander gekoppelt sind, daß ein Teilstrom aus der Auslaßstromführung in die Einlaßstromführung rückführbar ist. Dazu sind entsprechende Durchlaßmittel vorgesehen. Auf dieses Dokument wird ebenfalls ausdrücklich Bezug genommen.

Vor dem Druckkessel 12 ist ein Sekundärkonzentrator 30 für Solarstrahlung angeordnet. Über den Sekundärkonzentrator 30 läßt sich in einem Primärkonzentrator konzentrierte Solarstrahlung auf die Öffnung 22 und damit auf den Absorber 20 konzentrieren. Der Primärkonzentrator ist beispielsweise durch einen oder mehrere Heliostate gebildet.

Die Solarstrahlung (in Figur 1 durch das Bezugszeichen 32 angedeutet) tritt durch das Eintrittsfenster 24 hindurch und trifft auf den Absorber 20 und heizt diesen auf. Dadurch entsteht Infrarotstrahlung, die unter anderem auch in Richtung des Eintrittsfensters 24 abgestrahlt wird. Es hat sich gezeigt, daß der überwiegende Teil der Wärmebelastung des Eintrittsfensters 24 von der Infrarotstrahlung des Absorbers 20 stammt.

Erfindungsgemäß ist eine als Ganzes mit 34 bezeichnete Infrarotstrahlungsschildeinrichtung vorgesehen, welche zwischen dem Eintrittsfensters 24 und dem Absorber 20 angeordnet ist. Diese Infrarotstrahlungsschildeinrichtung 34 ist so angeordnet und ausgebildet, daß sie transparent für Solarstrahlung ist, d. h. Solarstrahlung zum Absorber 20 durchläßt. Sie ist ferner so ausgebildet, daß sie Infrarotstrahlung, welche vom Absorber 20 stammt, vom Eintrittsfenster 24 abfängt, d. h. dieses bezüglich Infrarotstrahlung von dem Absorber 20 zumindest näherungsweise abschirmt. Dadurch ist die Wärmebelastung des Eintrittsfensters 24 stark verringert.

Die Infrarotstrahlungsschildeinrichtung 34 ist opak für Infrarotstrahlung. Dies läßt sich dadurch erreichen, daß diese Infrarotstrahlung absorbiert und/oder nach hinten, in Richtung des Absorbers 20, reflektiert.

Die Infrarotstrahlungsschildeinrichtung 34 ist so angeordnet und ausgebildet, daß das Eintrittsfenster 24 im wesentlichen über seine gesamte Innenseite 36, welche in einem Innenraum 38 des Druckkessels 12 liegt und dem Absorber 20 zugewandt ist, abdeckt, so daß Infrarotstrahlung, welche vom Absorber 20 ausgeht, im wesentlichen von der gesamten Innenseite 36 des Eintrittsfensters 24 abgehalten wird.

Bei dem ersten Ausführungsbeispiel 10 ist die Infrarotstrahlungsschildeinrichtung als Schildfenster 40 ausgebildet, welches insbesondere zusammenhängend ist. Das Schildfenster 40 kann einstückig ausgebildet sein oder aus mehreren Segmenten zusammengesetzt sein. Insbesondere ist das Schildfenster 40 aus Quarzglas hergestellt. Da über das Schildfenster 40 sich das Eintrittsfenster 24 - passiv - kühlen läßt, wird im folgenden dieses Schildfenster 40 auch als Kühlfenster bezeichnet.

Quarzglas hat die Eigenschaft, für Solarstrahlung durchlässig zu sein und Infrarotstrahlung zu absorbieren. Bei dem Eintrittsfenster 24 tritt dadurch das Problem auf, daß dieses, wenn keine Infrarotstrahlungsschildeinrichtung 34 vorgesehen wäre, durch die Infrarotstrahlung des Absorbers 20 erhitzt wird. Bei hohen Temperaturen und insbesondere ab ca. 800°C verändert sich das Quarzglas und es kann zu einem Entglasungsvorgang durch Bildung von Kristalliten kommen. Die Bildungsgeschwindigkeit der Kristallite ist dabei abhängig von der Temperatur. Entglasung führt zu einer größeren Strahlungsabsorption und damit zu einer stärkeren Wärmebelastung, was wiederum zu größeren mechanischen Spannungen führt. Diese Probleme lassen sich durch das Vorsehen des Schildfensters 40 als Infrarotstrahlungsschildeinrichtung 34 stark verringern.

Bei einem aus Quarzglas hergestellten Schildfenster 40 absorbiert dieses die Infrarotstrahlung, welche vom Absorber 20 kommt, wobei die Solarstrahlung, welche über das Eintrittsfenster 24 in den Innenraum 38 des Druckkessels 12 eintritt, zum Absorber 20 durchgelassen wird. Das Schildfenster 40 ist in dem Druckkessel 12 angeordnet und bildet damit in diesem Sinne kein Druckfenster wie das Eintrittsfenster 24.

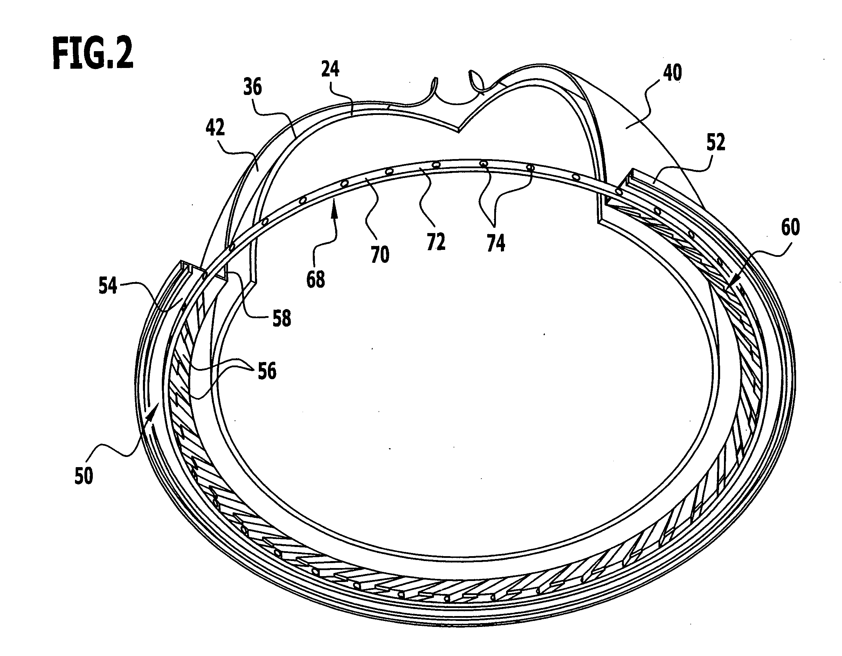

Das Schildfenster 40 ist beispielsweise so ausgebildet, daß zwischen diesem und dem Eintrittsfenster 24 ein Spalt 42 gebildet ist (Figuren 1 und 2). Das Schildfenster 40 ist vorzugsweise so ausgebildet, daß der Spalt 42 eine gleichmäßige Dicke über das Eintrittsfenster 24 aufweist. Durch den Spalt 42 läßt sich über eine - aktive - Kühlungseinrichtung Kühlungsfluid und insbesondere Luft durchführen, um sowohl das Eintrittsfenster 24 auch als das Schildfenster 40, d. h. das Kühlfenster, zu kühlen. Das Schildfenster 40 stellt dadurch einen Strömungsraum zur Kühlung des Eintrittsfensters 24 bereit, nämlich den Spalt 42.

Bei dem in Figur 1 gezeigten Ausführungsbeispiel weist das Schildfenster 40 in seinem Scheitelbereich 44, welcher dem Scheitelbereich 28 des Eintrittsfensters 24 benachbart ist, eine Öffnung 46 auf. Diese Öffnung 26 ist koaxial zu einer Achse 48 des Eintrittsfensters 24 angeordnet. Das Eintrittsfenster 24 ist dabei vorzugsweise rotationssymmetrisch zu der Achse 48 ausgebildet und das Schildfenster 40 ist vorzugsweise rotationssymmetrisch zu dieser Achse 48 ausgebildet.

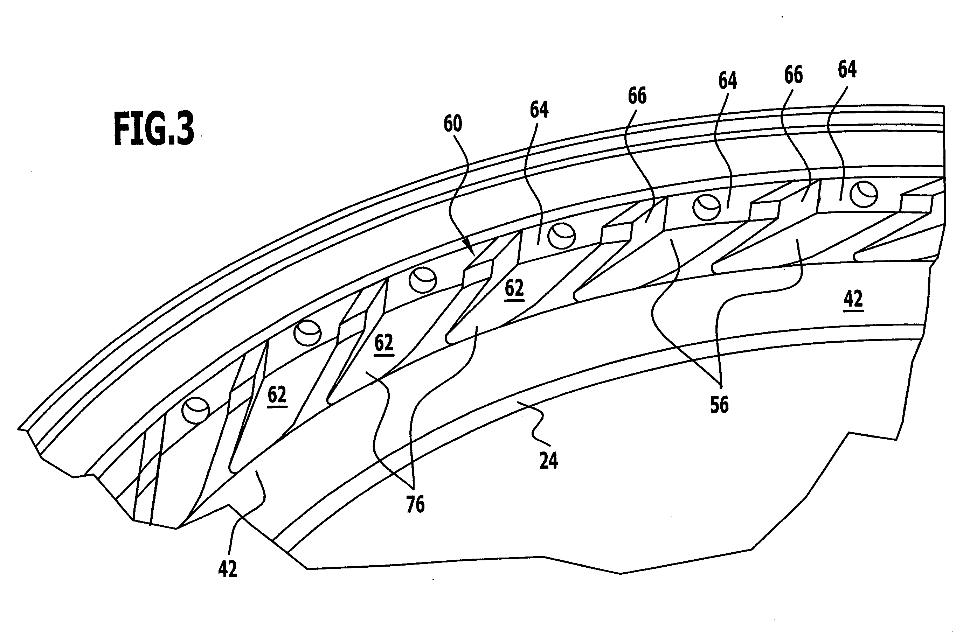

Es ist ein Einkopplungsbereich 50 für Kühlungsfluid in den Spalt 42 vorgesehen. Dieser Einkopplungsbereich 50 ist bei dem in den Figuren 1 und 2 gezeigten Ausführungsbeispiel am Fußbereich 26 des Eintrittsfensters 24 angeordnet. Beispielsweise ist ein Einkopplungsring 52 (Figur 2) vorgesehen, dem Kühlungsfluid (insbesondere Luft) zuführbar ist. Der Einkopplungsring 52 weist dazu einen umlaufenden Fluidraum 54 auf. Von diesem Fluidraum 54 ausgehend ist eine Mehrzahl von Fluidführungen 56 (Figuren 2 und 3) vorgesehen, welche in den Spalt 42 in einen Fußbereich 58 des Schildfensters 40 führen. Der Einkopplungsring 52 umgibt dabei diesen Fußbereich 58. Die Fluidführungen 56 sind von einer Dralleinrichtung 60 umfaßt, die dafür sorgt, daß in den Spalt 42 einströmendes Kühlungsfluid einen Drall enthält und damit die Geschwindigkeitskomponente in Umfangsrichtung erhöht wird. Dadurch wird der Wärmeübergang auf das Kühlungsfluid erhöht und die Kühlungswirkung wird verbessert.

Bei dem gezeigten Ausführungsbeispiel umfaßt die Dralleinrichtung 60 mit den Fluidführungen 56 Kanäle 62, welche schräg in den Spalt 42 münden. Ferner sind in einem Mündungsbereich 64 zwischen den Kanälen 62 Wandelemente 66 mit scharfen Kanten angeordnet.

Bei dem in den Figuren 1 bis 3 gezeigten Ausführungsbeispiel ist es vorgesehen, daß Kühlungsfluid über den Einkopplungsbereich 50, welcher im Fußbereich 26 des Eintrittsfensters 24 bzw. im Fußbereich 28 des Schildfensters 40 liegt, eingekoppelt wird. Dies ist vorteilhaft, da dadurch eine homogene Kühlwirkung erzielt wird.

Im Fußbereich ist bei bestimmten Betriebsbedingungen die Strömungsgeschwindigkeit des Kühlungsfluids gering, wobei das Kühlungsfluid noch kühl ist. Im Scheitelbereich, welcher nach Durchströmung des Spalts 42 erreicht wird, ist das Kühlungsfluid aufgeheizt, wobei dort durch eine Querschnittsverjüngung (bezogen auf die Achse 48) eine höhere Strömungsgeschwindigkeit vorliegen kann. Jedoch muß die Geschwindigkeit beim Austritt nicht unbedingt größer sein als beim Eintritt, da neben der Querschnittsverengung auch andere Effekte wie Drall und Druckverluste wirksam sein können.

Es ist grundsätzlich jedoch auch möglich, daß Kühlungsfluid von dem Scheitelbereich ausgehend zum Fußbereich geführt wird, d. h. Kühlungsfluid in den Scheitelbereich eingekoppelt wird.

Es ist auch möglich, daß das Schildfenster 40 über seine Fläche verteilt eine Mehrzahl von Öffnungen aufweist (anstatt einer einzigen Öffnung 46 im Scheitelbereich 44), über die Kühlungsfluid durch das Schildfenster 40 hindurch in die zweite Strömungsführung 18 strömen kann.

Bei dem in Figur 1 gezeigten Ausführungsbeispiel strömt Arbeitsmedium über die erste Strömungsführung 16 dem Absorber 20 zu. (Aufgeheiztes) Kühlungsfluid strömt über die Öffnung 46 aus dem Spalt 42 ebenfalls dem Absorber 20 zu. Der Kühlungsfluidstrom bildet damit einen Teilstrom des Arbeitsmediums, welches dann den Absorber 20 durchströmt und über die zweite Strömungsführung 18 abgeführt wird.

Bei dem in Figur 1 gezeigten Ausführungsbeispiel strömt das Kühlungsfluid hauptsächlich einem Bereich des Absorbers 20 zu, welcher dem Scheitelbereich 28 des Eintrittsfensters 24 gegenüberliegt.

Bei einer Variante des ersten Ausführungsbeispiels ist es vorgesehen, daß der Kühlungsfluidströmung in dem Spalt 42 eine Schwingung überlagert wird, d. h. eine Oszillation aufgeprägt wird. Es kann das Problem auftreten, daß sich in dem Spalt 42 insbesondere im Scheitelbereich 28 des Eintrittsfensters 24 ein Staupunkt der Kühlungsfluidströmung ausbildet. In diesem Staupunkt ist unter Umständen eine ausreichende Kühlung nicht mehr gewährleistet. Durch die Aufprägung einer Schwingung läßt sich der Staupunkt oszillierend verschieben.

Zur Erzeugung der Oszillation ist im Spalt 42 eine als Ganzes mit 68 bezeichnete Einrichtung zur Erzeugung von Schwingungen vorgesehen. Diese Einrichtung umfaßt beispielsweise eine Abdeckung 70, mit der periodisch die Einkopplung von Kühlungsfluid in den Spalt 42 abdeckbar und freigebbar ist. Dies bedeutet, wenn man sich auf einen bestimmten Punkt des Einkopplungsbereichs 50 setzt, daß über diesen periodisch Kühlungsfluid eingekoppelt wird - die Kühlungsfluideinkopplung wird periodisch gestoppt bzw. periodisch freigegeben.

Bei einem Ausführungsbeispiel ist die Abdeckung 70 mittels eines Bands 72 gebildet, welches gleichmäßig beabstandete Öffnungen 74 aufweist. Das Band 72 ist in dem Fluidraum 54 um eine Drehachse, welche mit der Achse 48 zusammenfällt, rotierbar oder oszillierbar gelagert. Das Band 72 sitzt beispielsweise vor Einkopplungsmündungsöffnungen 76 (Figur 3) der Kanäle 62. Durch Rotation des Bands 72 werden diese Einkopplungsmündungsöffnungen 76 periodisch freigegeben bzw. gesperrt, so daß über die entsprechenden Kanäle 62 periodisch Kühlungsfluid in den Spalt 42 einströmen kann. Dadurch läßt sich der Kühlungsfluidströmung in dem Spalt 42 eine Oszillation überlagern.

Bei der erfindungsgemäßen Lösung wird die infrarote Abstrahlung des Absorbers 20 vom Zugang zu dem Eintrittsfenster 24 abgefangen, d. h. das Schildfenster 40 (die Infrarotstrahlungsschildeinrichtung 34) bildet ein "Hitzeschild" für die Infrarotstrahlung des Absorbers 20, welches bezogen auf die Infrarotstrahlung das Eintrittsfenster 24 von dem Absorber 20 abschirmt. Dadurch wird eine passive Kühlung des Eintrittsfensters 24 bewirkt. Das Schildfenster 40 ist dazu für Infrarotstrahlung opak. Solarstrahlung, welche durch das Eintrittsfenster 24 in den Innenraum 28 des Druckkessels 12 eintritt, erreicht jedoch den Absorber 20, da das Schildfenster 40 für Solarstrahlung durchlässig ist.

Durch die Durchströmung des Spalts 42 mit Kühlungsfluid (und insbesondere Luft) wird die Kühlung des Eintrittsfensters 24 (und auch des Schildfensters 40) verbessert. Es wird eine zusätzliche aktive Kühlung bereitgestellt. Die Anströmung des Eintrittsfensters 24 mit Kühlungsfluid erfolgt dabei an der Innenseite 36 des Eintrittsfensters 24, d. h. ausgehend von dem Innenraum 38 des Druckkessels 12.

Es ist dabei grundsätzlich möglich, daß die Infrarotstrahlungsschildeinrichtung 34 als Absorber wirkt und insbesondere als Vorabsorber für den Absorber 20.

Das aufgeheizte Kühlungsfluid wird der Strömungsführung 16 für Arbeitsmedium zugeführt, so daß der entsprechende Kühlungsfluidmassenstrom ein Teilstrom des Arbeitsmediummassenstroms des Solarstrahlungsempfängers 10 ist.

Durch die erfindungsgemäße Lösung läßt sich die Temperatur des Eintrittsfensters 24 unterhalb einer vorgegebenen Grenztemperatur wie beispielsweise 800°C halten, um so beispielsweise Entglasungsvorgänge gering zu halten. Durch die Kühlung von der Innenseite 36 her wird ein hoher Temperaturgradient in der Glaswand des Eintrittsfensters 24 verhindert. Dadurch wiederum werden mechanische Spannungen in dem Eintrittsfenster 24 verringert. Weiterhin läßt sich über den Spalt 42 das Eintrittsfenster 24 homogen kühlen, so daß auch dadurch mechanische Spannungen verringert sind. Weiterhin ergibt sich ein verbesserter Wirkungsgrad, da die Wärme der Kühlung genutzt werden kann: Sie bleibt im Solarstrahlungsempfänger und stellt keinen Verlust dar.

Durch die Verringerung der Wärmelast auf das Eintrittsfenster 24, welches als Druckfenster der Drucklast des Druckkessels 12 ausgesetzt ist, lassen sich hohe Auslaßtemperaturen für das Arbeitsmedium erzielen.

Weiterhin sind auch die Abstrahlungsverluste und konvektiven Verluste des Eintrittsfensters 24 verringert, so daß sich dadurch wiederum der Wirkungsgrad des Solarstrahlungsempfängers 10 verbessert.

Durch das Vorsehen eines definierten Strömungskanals, nämlich dem Spalt 42, wird der Wärmeübergang optimiert und damit eine hohe Kühleffizienz erreicht.

Durch die Dralleinrichtung 60 läßt sich der Wärmeübergang weiter erhöhen. Durch das Vorsehen eines zweiten Fensters, d. h. des Schildfensters 40, läßt sich die Fensterfunktion trennen in das drucktragende Eintrittsfenster 24 und das thermisch belastete Schildfenster 40, welches auf den Außenraum bezogen nicht drucktragend ist.

Durch das Vorsehen einer inneren Fensterkühlung ist die Wärmeintegration verbessert.

Da das Schildfenster 40 im Vergleich zu dem Eintrittsfenster 24 nicht drucktragend ist, kann dieses beispielsweise auch aus mehreren einzelnen Segmenten aufgebaut werden, wobei es vorzugsweise zusammenhängend sein sollte.

Als Kühlungsfluid kann Luft eingesetzt werden, welche in einer Strömungsführung für eine Mehrzahl von Solarstrahlungsempfängern in einer Abzweigungsvorrichtung abgezweigt wird, welche diesen Solarstrahlungsempfängern vorgeschaltet ist.

Bei dem ersten Ausführungsbeispiel 10 ist die Infrarotstrahlungsschildeinrichtung 34 mittels des Schildfensters 40 gebildet, welches als zweites Fenster in dem Innenraum 38 des Druckkessels 12 über das Eintrittsfenster 24 gesetzt angeordnet ist.

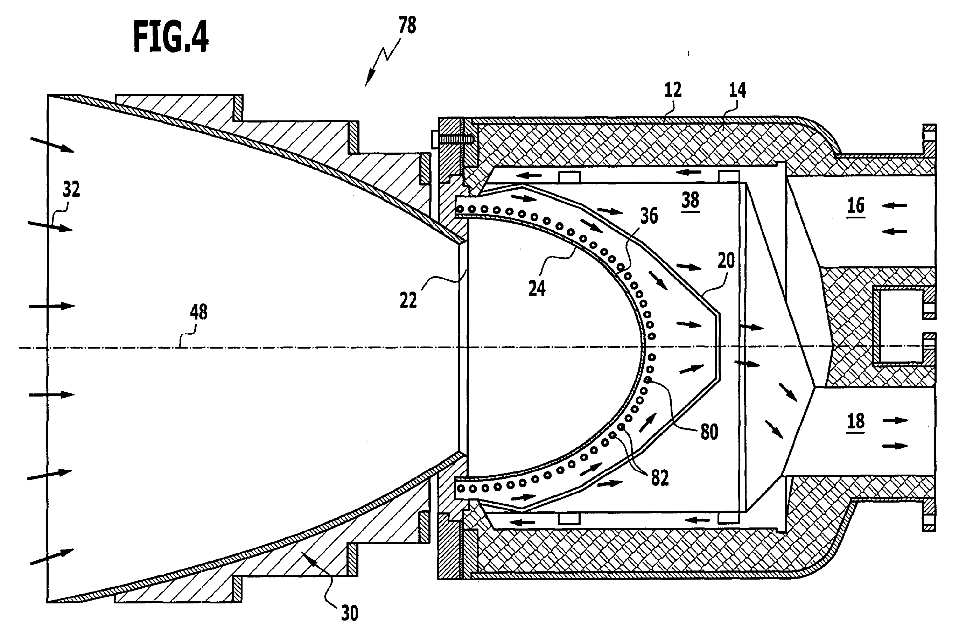

Bei einem zweiten Ausführungsbeispiel eines Strahlungsempfängers, welcher in Figur 4 als Ganzes mit 78 bezeichnet ist, ist die Infrarotstrahlungsschildeinrichtung mittels einer Rohreinrichtung 80 gebildet (Figuren 2 und 3). In der Figur 4 werden dabei gleiche Elemente wie bei dem ersten Ausführungsbeispiel 10 gemäß Figur 1 mit dem gleichen Bezugszeichen versehen.

Die Rohreinrichtung 80 umfaßt eine Mehrzahl von Rohren 82, die ringförmig das Eintrittsfenster 24 umgeben und an oder in der Nähe der Innenseite 36 zwischen dem Eintrittsfenster 24 und dem Absorber 20 angeordnet sind. Die Rohre 82 sind dabei für Solarstrahlung transparent und insbesondere aus Quarzglas hergestellt.

Die als Rohrringe 84 ausgebildeten Rohre sind koaxial zur Achse 48 angeordnet, wobei der Durchmesser der Rohrringe 84 zum Absorber 20 hin abnimmt. Die Rohreinrichtung 80 sitzt vollständig in dem Innenraum 38 des Druckkessels 12.

In den Rohrringen 84 der Rohreinrichtung 80 kann Kühlungsfluid strömen und damit das Eintrittsfenster 24 (und die Rohreinrichtung 80 selber) kühlen. Die Rohreinrichtung 80 wiederum, die für Solarstrahlung zum Absorber 20 hin durchlässig ist, absorbiert Infrarotstrahlung, weiche vom Absorber 20 ausgeht, und schirmt dadurch das Eintrittsfenster 24 gegenüber dieser Infrarotstrahlung ab. Es ist dazu günstig, wenn die Rohrringe 84 benachbarter Rohrringebenen sich berühren, damit zwischen benachbarten Rohrringen 84 kein Zwischenraum vorliegt, durch den Infrarotstrahlung zu dem Eintrittsfenster 24 gelangen kann.

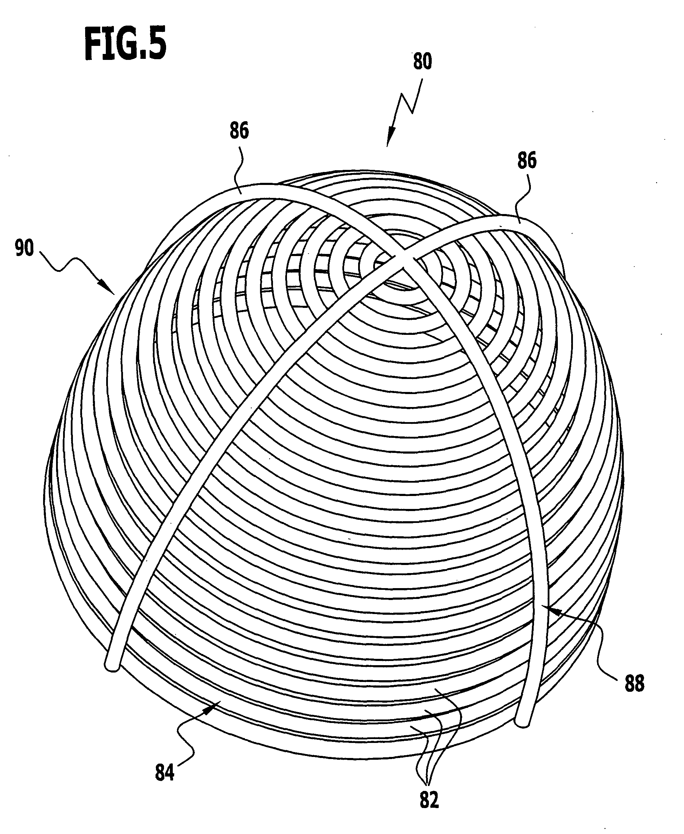

Zur Versorgung der Rohrringe 84 mit Kühlungsfluid können Sammelrohre und Verteilerrohre 86 vorgesehen sein, welche beispielsweise quer zu den Rohrringen 84 (Figur 5) angeordnet sind. Diese Sammelrohre und Verteilerrohre 86 können dabei gleichzeitig auch als Gerüst 88 zum Halten der Rohrringe 84 dienen. Es wird dabei eine Rohrstruktur in einer Art von Rohrringhaube 90 gebildet, welche sich in dem Innenraum 38 über dem Eintrittsfenster 24 positionieren läßt.

Es ist grundsätzlich auch möglich, daß die Rohreinrichtung 80 ein oder mehrere spiralförmig angeordnete Rohre aufweist anstatt von bezüglich der Kühlungsfluidführung getrennten Rohrringen 84.

In der Rohreinrichtung 80 ist, wenn die Rohre 82 keine Öffnungen zu dem Eintrittsfenster 24 hin aufweisen, Kühlungsfluidströmung "gefangen", d. h. das Eintrittsfenster 24 wird nicht direkt mit Kühlungsfluid beaufschlagt. Das in der Rohreinrichtung 80 strömende Kühlungsfluid kühlt im wesentlichen nur die Rohreinrichtung 80 selber.

Es ist auch möglich, daß die Rohre 82 der Rohreinrichtung 80 mit Öffnungen versehen sind, welche der Innenseite 36 des Eintrittsfensters 24 gegenüberliegen. Diese Öffnungen sind vorzugsweise gleichmäßig bezogen auf die Innenseite 36 des Eintrittsfensters 24 verteilt. Über diese Öffnungen kann dann Kühlungsfluid ausströmen und die Innenseite 36 des Eintrittsfensters 24 beaufschlagen und damit dieses kühlen. Das entsprechende Kühlungsfluid (insbesondere Luft) bildet dann einen Teilstrom des Arbeitsmediums, welches durch den Druckkessel 12 strömt.

Bei der Rohreinrichtung 80 des Solarstrahlungsempfängers 78 absorbiert die kühlbare Rohreinrichtung 80 die Infrarotstrahlung des Absorbers 20.

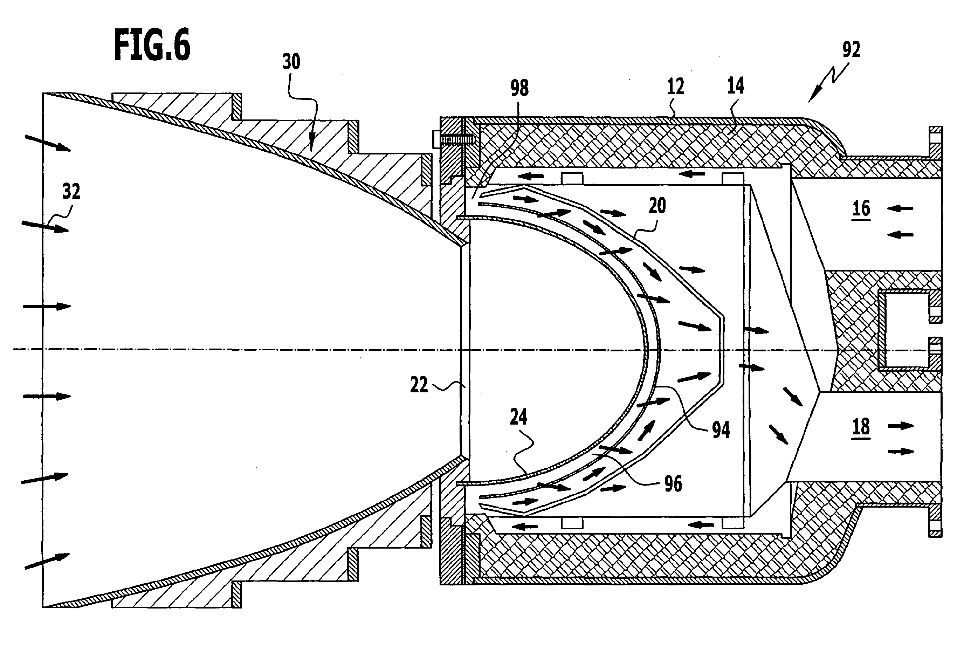

Bei einem dritten Ausführungsbeispiel, welches in Figur 6 schematisch dargestellt und dort als Ganzes mit 92 bezeichnet ist, ist als Infrarotstrahlungsschildeinrichtung durch eine poröse Struktur 94 vorgesehen, über deren ganze Fläche durch "Poren" ein gasförmiges Medium durchströmen kann. Die poröse Struktur 94 ist dabei wiederum transparent für Solarstrahlung und opak für Infrarotstrahlung, welcher vom Absorber 20 ausgeht.

Die poröse Struktur 94 ist beispielsweise mittels Glasfasern oder Glashohlkörpern (insbesondere aus Quarzglas) hergestellt. Beispielsweise ist die poröse Struktur 94 ein Gewebe oder Gewirke von Glasfasern.

### (In Figur 6 werden für gleiche Teile wie bei dem ersten Ausführungsbeispiel gemäß Figur 1 gleiche Bezugszeichen verwendet.)

Die poröse Struktur 94, welche beispielsweise haubenförmig ausgestaltet ist, ist in dem Innenraum 38 über das Eintrittsfenster 24 gesetzt, wobei ein Spalt 96 zwischen der porösen Struktur 94 und dem Eintrittsfenster 24 gebildet sein kann. In den Spalt 96 läßt sich Arbeitsmedium des Druckkessels 12 einkoppeln, welches durch die poröse Struktur 94 durchströmt und den Absorber 20 durchströmt. Die Durchströmung erfolgt dabei im wesentlichen über die gesamte Fläche der porösen Struktur 94 als Infrarotstrahlungsschildeinrichtung 34.

In der ersten Strömungsführung 16 für das Arbeitsmedium ist eine Abzweigung 98 angeordnet, über die sich ein Teilstrom an Arbeitsmedium abzweigen läßt und dem Spalt 96 zuführen läßt. Dieses Arbeitsmedium durchströmt den Spalt 96, wobei es großflächig durch die poröse Struktur 94 hindurchtritt und dem Absorber 20 (zur Aufheizung durch die Solarstrahlung) zugeführt wird.
Der Teilstrom an Arbeitsmedium kühlt dabei das Eintrittsfenster 24 (und die poröse Struktur 94 als Infrarotstrahlungsschildeinrichtung 34).

Alternativ ist es möglich, daß der gesamte Arbeitsmediummassenstrom in der ersten Strömungsführung 16 in den Spalt 96 eingekoppelt wird, d. h. daß der gesamte Arbeitsmediummassenstrom die poröse Struktur 94 durchströmen muß, bevor er zum Absorber 20 gelangt. Das Arbeitsmedium dient dann als Kühlungsmedium für das Eintrittsfenster 24 und die poröse Struktur 94, und die poröse Struktur 94 dient als Vorabsorber für das Arbeitsmedium. Unter Umständen läßt sich dann auf ein Mitteltemperaturmodul in einem Solarstrahlungs-Empfängersystem verzichten, wenn durch die poröse Struktur 94 für eine ausreichende Vorwärmung des Arbeitsmediums gesorgt wird. Es ist dann ein zweistufiger Absorber gebildet, wobei die erste Stufe die poröse Struktur 94 ist und die zweite Stufe der Absorber 20.

Die poröse Struktur 94, an der sich das durchgeführte Arbeitsmedium (als Kühlungsfluid) aufheizt, wirkt somit auch als Absorber, da eine Vorheizung des Arbeitsmediums durchgeführt wird.

Es ist grundsätzlich auch möglich, daß das Eintrittsfenster von dem Innenraum 38 des erfindungsgemäßen Solarstrahlungsempfängers her mit einem Kühlungsfluid in der Form eines Freistrahls beaufschlagt wird.

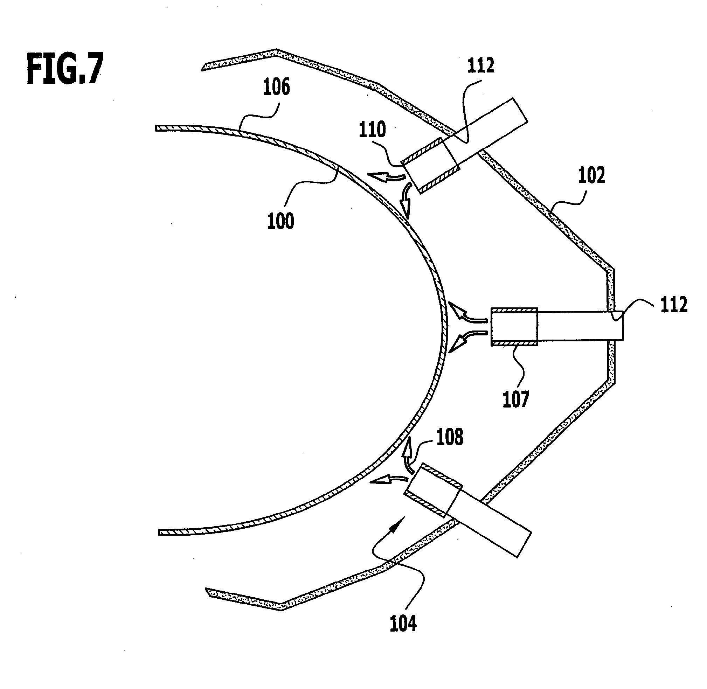

Bei einem vierten Ausführungsbeispiel, welches teilweise in Figur 7 gezeigt ist, ist ein Eintrittsfenster 100 vorgesehen, welchem ein Absorber 102 in einem Innenraum eines Druckkessels zugewandt angeordnet ist. Zwischen dem Fenster 100 und dem Absorber 102 ist eine Freistrahleinrichtung 104 vorgesehen, welche eine Mehrzahl von Düsen 107 aufweist, über welche eine Innenseite 106 des Eintrittsfensters 100 mit Kühlungsfluid-Freistrahlen 108 beaufschlagbar ist.

Mündungsöffnungen 110 der Düsen 107 sind dabei der Innenseite 106 des Eintrittsfensters zugewandt.

Vorzugsweise sind die Düsen 107 gleichmäßig um die Innenseite 106 verteilt.

Kühlungsfluid, welches insbesondere Arbeitsmedium ist, wird über die Freistrahleinrichtung 104 dem Eintrittsfenster 100 zugeführt. Es wird dann ein Teilstrom an (vorzugsweise noch nicht aufgeheiztem) Arbeitsmedium abgezweigt, um die Freistrahlen 108 zu erzeugen. Der Absorber 102 ist mit Durchbrüchen 112 für die Düsen 107 versehen, so daß Kühlungsfluid den Düsen 107 mit ihren Mündungsöffnungen 110 zuführbar ist.

Bei diesem Ausführungsbeispiel wird ein Teilstrom an Kühlungsfluid von dem Arbeitsmedium abgezweigt und eine Zuführung für Kühlungsfluid ist an die (erste) Strömungsführung 16 für Arbeitsmedium gekoppelt.

Bei einer Variante des Solarstrahlungsempfängers 78 gemäß Figur 4, bei der die Rohrringe 82 mit dem Eintrittsfenster 24 zugewandten Öffnungen versehen sind, lassen sich ebenfalls Freistrahlen erzeugen, mit denen die Innenseite 36 des Eintrittsfensters 24 angeblasen wird. In diesem Sinne ist dann dort eine Freistrahleinrichtung gebildet.

Durch die Kühlung des Eintrittsfensters 24 von einer Innenseite des Druckkessels her wird ein großer Temperaturgradient über die Wand des Eintrittsfensters 100 verhindert.

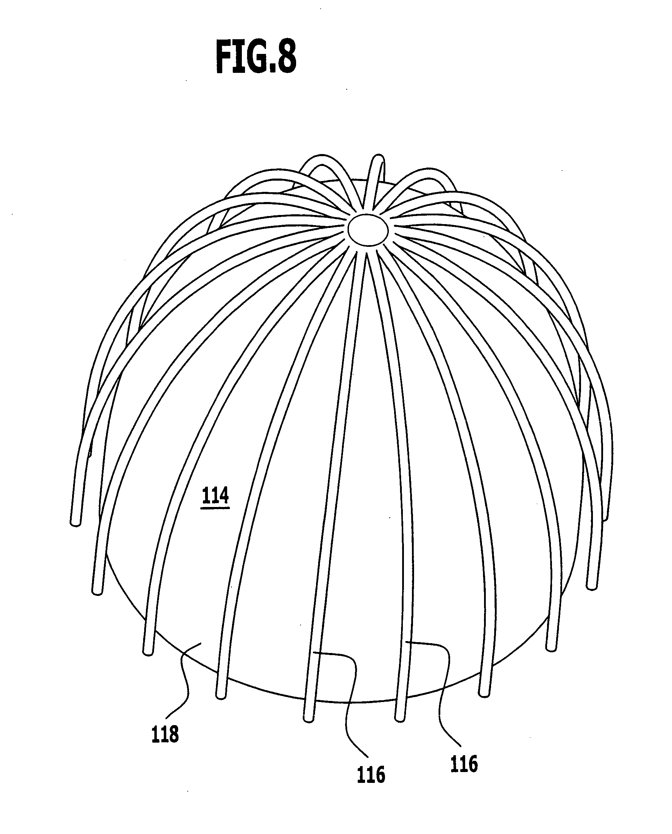

Bei einem fünften Ausführungsbeispiel, für welches in Figur 8 ein Eintrittsfenster 114 gezeigt ist, ist eine Mehrzahl von Rohren 116 in einem Innenraum eines Druckkessels auf das Eintrittsfenster 114 beabstandet gesetzt angeordnet. Die Rohre 116 sind vorzugsweise transparent für Solarstrahlung. Diese Rohre 116 sind mit Öffnungen versehen, welche einer Innenseite 118 des Eintrittsfensters 114 zugewandt sind. Diese Öffnungen bilden Düsenmündungs-öffnungen für Kühlungsfiluid, über die sich die Innenseite 118 des Eintrittsfensters 114 mit Kühlungsfluid anblasen läßt. Das Kühlungsfluid wird dazu in die Rohre 116 eingekoppelt.

## Patentansprüche

1. Solarstrahlungsempfänger, umfassend einen Druckkessel (12) und einen in dem Druckkessel (12) angeordneten Absorber (20) für Solarstrahlung, wobei ein Arbeitsmedium durch den Druckkessel (12) zur Wärmeaufnahme am Absorber (20) führbar ist, und ein am Druckkessel (12) angeordnetes Eintrittsfenster (24; 100; 114) für die Solarstrahlung, **dadurch gekennzeichnet , daß** zwischen dem Eintrittsfenster (24) und dem Absorber (20) eine Infrarotstrahlungsschildeinrichtung (34) angeordnet ist, welche für Solarstrahlung durchlässig ist und welche vom Absorber (20) ausgehende Infrarotstrahlung abfängt und daß die Infrarotstrahlungsschildeinrichtung (34) so angeordnet und ausgebildet ist, daß vom Absorber (20) ausgehende Infrarotstrahlung vom Eintrittsfenster (24) abgeschirmt ist, um den Wärmeeintrag an das Eintrittsfenster (24) von dem Innenraum des Druckkessels (12) her zu verringern.

2. Solarstrahlungsempfänger nach Anspruch 1, **dadurch gekennzeichnet, daß** die Infrarotstrahlungsschildeinrichtung (34) so angeordnet und ausgebildet ist, daß vom Absorber (20) ausgehende Infrarotstrahlung bezogen auf die Gesamtfläche des Eintrittsfensters (24) abgefangen wird.

3. Solarstrahlungsempfänger nach Anspruch 1 oder 2, **dadurch gekennzeichnet, daß** das Eintrittsfenster (24) aus Quarzglas hergestellt ist.

4. Solarstrahlungsempfänger nach einem der vorangehenden Ansprüche, **dadurch gekennzeichnet, daß** die Infrarotstrahlungsschildeinrichtung (34) aus Quarzglas hergestellt ist.

5. Solarstrahlungsempfänger nach dem Oberbegriff von Anspruch 1 oder einem der vorangehenden Ansprüche, **dadurch gekennzeichnet, daß** eine Kühlungseinrichtung zur Kühlung des Eintrittsfensters (24; 100; 114) an einer dem Absorber (20; 102) zugewandten Innenseite (36; 106; 118) vorgesehen ist.

6. Solarstrahlungsempfänger nach Anspruch 5, **dadurch gekennzeichnet, daß** eine Anströmung der Innenseite (36; 106; 118) des Eintrittsfensters (24; 100; 114) mit Kühlungsfluid vorgesehen ist.

7. Solarstrahlungsempfänger nach Anspruch 5 oder 6, **dadurch gekennzeichnet, daß** zwischen dem Eintrittsfenster (24) und der Infrarotstrahlungsschildeinrichtung (34) ein Spalt (42; 96) gebildet ist, durch den Kühlungsfluid führbar ist.

8. Solarstrahlungsempfänger nach Anspruch 7, **dadurch gekennzeichnet, daß** in der Infrarotstrahlungsschildeinrichtung (34; 40; 94) mindestens eine Öffnung vorgesehen ist, durch die Kühlungsfluid aus dem Spalt (42; 96) zum Absorber (20) strömen kann.

9. Solarstrahlungsempfänger nach Anspruch 7 oder 8, **dadurch gekennzeichnet, daß** eine Öffnung (46) in einem Scheitelbereich (44) der Infrarotstrahlungsschildeinrichtung (34; 40) bezogen auf das Eintrittsfenster (24) vorgesehen ist.

10. Solarstrahlungsempfänger nach Anspruch 9, **dadurch gekennzeichnet, daß** die Öffnung (46) koaxial zu einer Achse (48) des Eintrittsfensters (24) ausgerichtet ist.

11. Solarstrahlungsempfänger nach Anspruch 8, **dadurch gekennzeichnet, daß** die Infrarotstrahlungsschildeinrichtung (34; 94) mit einer Mehrzahl von Öffnungen versehen ist, so daß Kühlungsfluid aus dem Spalt (96) zum Absorber (20) strömen kann.

12. Solarstrahlungsempfänger nach einem der Ansprüche 7 bis 11, **dadurch gekennzeichnet, daß** eine Einkopplung von Kühlungsfluid in den Spalt (42; 96) in einen Fußbereich des Spalts (42; 96) vorgesehen ist.

13. Solarstrahlungsempfänger nach einem der Ansprüche 7 bis 11, **dadurch gekennzeichnet, daß** eine Einkopplung von Kühlungsfluid in einen Scheitelbereich des Spalts vorgesehen ist.

14. Solarstrahlungsempfänger nach einem der Ansprüche 7 bis 13, **dadurch gekennzeichnet, daß** dem Spalt (42) eine Dralleinrichtung (60) zur Verdrallung von in dem Spalt (42) strömenden Kühlungsfluid zugeordnet ist.

15. Solarstrahlungsempfänger nach einem der Ansprüche 7 bis 14, **dadurch gekennzeichnet, daß** dem Spalt (42) eine Einrichtung (68) zur Erzeugung von Schwingungen in der Kühlungsfluidströmung im Spalt (42) zugeordnet ist.

16. Solarstrahlungsempfänger nach Anspruch 15, **dadurch gekennzeichnet, daß** die Einrichtung (68) zur Erzeugung von Schwingungen eine Abdeckung (70) umfaßt, mit der periodisch die Einkopplung von Kühlungsfluid in den Spalt (42) freigebbar ist.

17. Solarstrahlungsempfänger nach Anspruch 15 oder 16, **dadurch gekennzeichnet, daß** die Einrichtung (68) zur Erzeugung von Schwingungen ein Band (72) mit Öffnungen (74) umfaßt, welches in einem Fußbereich des Spalts (42) drehbar oder oszillierbar angeordnet ist.

18. Solarstrahlungsempfänger nach Anspruch 5 oder 6, **dadurch gekennzeichnet, daß** an oder in der Nähe der Innenseite (36) des Eintrittsfensters (24) eine Rohreinrichtung (80) angeordnet ist, in welcher Kühlungsfluid strömt.

19. Solarstrahlungsempfänger nach Anspruch 5 oder 6 oder 18, **dadurch gekennzeichnet, daß** eine Freistrahleinrichtung (104; 116) vorgesehen ist, über welche die Innenseite (36; 106; 118) des Eintrittsfensters (24; 100; 114) mit Kühlungsfluid-Freistrahlen beaufschlagbar ist.

20. Solarstrahlungsempfänger nach Anspruch 19, **dadurch gekennzeichnet, daß** die Freistrahleinrichtung (104) eine Mehrzahl von Düsen (107) umfaßt, deren Mündungsöffnungen (110) der Innenseite (106) des Eintrittsfensters (100) zugewandt sind.

21. Solarstrahlungsempfänger nach Anspruch 19 oder 20, **dadurch gekennzeichnet, daß** die Freistrahleinrichtung eine Mehrzahl von Rohren (116) umfaßt, welche Düsenöffnungen aufweisen.

22. Solarstrahlungsempfänger nach Anspruch 21, **dadurch gekennzeichnet, daß** die Rohre (116) fächerförmig an oder in der Nähe der Innenseite (118) des Eintrittsfensters (114) angeordnet sind.

23. Solarstrahlungsempfänger nach einem der Ansprüche 5 bis 22, **dadurch gekennzeichnet, daß** eine Kühlungsfluidführung an eine Strömungsführung (16) für Arbeitsmedium in dem Druckkessel (12) gekoppelt ist.

24. Solarstrahlungsempfänger nach Anspruch 23, **dadurch gekennzeichnet, daß** eine Abführung für Kühlungsfluid an die Strömungsführung (16) für Arbeitsmedium gekoppelt ist.

25. Solarstrahlungsempfänger nach Anspruch 23, **dadurch gekennzeichnet, daß** eine Zuführung für Kühlungsfluid an die Strömungsführung für Arbeitsmedium gekoppelt ist.

26. Solarstrahlungsempfänger nach einem der vorangehenden Ansprüche, **dadurch gekennzeichnet, daß** die Infrarotstrahlungsschildeinrichtung (34) als zusammenhängendes Schildfenster (40) ausgebildet ist, welches zwischen dem Eintrittsfenster (24) und dem Absorber (20) angeordnet ist.

27. Solarstrahlungsempfänger nach Anspruch 26, **dadurch gekennzeichnet, daß** die Infrarotstrahlungsschildeinrichtung (34; 40) einstückig ausgebildet ist.

28. Solarstrahlungsempfänger nach Anspruch 26, **dadurch gekennzeichnet, daß** die Infrarotstrahlungsschildeinrichtung (34; 40) aus einer Mehrzahl von Segmenten zusammengesetzt ist.

29. Solarstrahlungsempfänger nach einem der Ansprüche 26 bis 28, **dadurch gekennzeichnet, daß** das Eintrittsfenster (24) und das Schildfenster (40) gleichmäßig beabstandet angeordnet und ausgebildet sind.

30. Solarstrahlungsempfänger nach einem der Ansprüche 1 bis 25, **dadurch gekennzeichnet, daß** die Infrarotstrahlungsschildeinrichtung (34; 80) ein transparentes Rohr (82) oder eine Mehrzahl von transparenten Rohren (82) umfaßt, welche zwischen dem Eintrittsfenster (24) und dem Absorber (20) angeordnet sind.

31. Solarstrahlungsempfänger nach Anspruch 30, **dadurch gekennzeichnet, daß** das oder die Rohre (82) von Kühlungsfluid durchströmt sind.

32. Solarstrahlungsempfänger nach Anspruch 30 oder 31, **dadurch gekennzeichnet, daß** das oder die Rohre (82) um das Eintrittsfenster (24) bezogen auf eine Achse (48) des Eintrittsfensters (24) liegen.

33. Solarstrahlungsempfänger nach einem der Ansprüche 30 bis 32, **dadurch gekennzeichnet, daß** das oder die Rohre (82) mit der Innenseite (36) des Eintrittsfensters (24) zugewandten Öffnungen versehen sind.

34. Solarstrahlungsempfänger nach einem der Ansprüche 30 bis 33, **dadurch gekennzeichnet, daß** mittels Sammelrohren (86) und/oder Verteilerrohren (86) eine Rohrstruktur gebildet ist.

35. Solarstrahlungsempfänger nach einem der Ansprüche 1 bis 25, **dadurch gekennzeichnet, daß** die Infrarotstrahlungsschildeinrichtung (34; 94) als poröse Struktur ausgebildet ist, welche für Solarstrahlung durchlässig ist und für Infrarotstrahlung opak ist.

36. Solarstrahlungsempfänger nach Anspruch 35, **dadurch gekennzeichnet, daß** die poröse Struktur (94) aus einem transparenten Material hergestellt ist.

37. Solarstrahlungsempfänger nach Anspruch 35 oder 36, **dadurch gekennzeichnet, daß** die poröse Struktur (94) aus Fasern und/oder Hohlkörpern hergestellt ist.

38. Solarstrahlungsempfänger nach einem der Ansprüche 35 bis 37, **dadurch gekennzeichnet, daß** die poröse Struktur (94) als Gewebe oder Gewirke ausgebildet ist.

39. Solarstrahlungsempfänger nach einem der vorangehenden Ansprüche, **dadurch gekennzeichnet, daß** die Infrarotstrahlungsschildeinrichtung (34) als Absorber für Infrarotstrahlung ausgebildet ist.

40. Verfahren zur Kühlung eines Eintrittsfensters eines Solarstrahlungsempfängers, welcher einen mit Solarstrahlung beaufschlagten Absorber aufweist, **dadurch gekennzeichnet, daß** das Eintrittsfenster an einer dem Absorber zugewandten Innenseite mittels Kühlungsfluid gekühlt wird.

41. Verfahren nach Anspruch 40, **dadurch gekennzeichnet, daß** vom Absorber in Richtung Eintrittsfenster ausgehende Infrarotstrahlung abgefangen wird.

42. Verfahren nach Anspruch 40 oder 41, **dadurch gekennzeichnet, daß** ein Kühlungsfluidstrom ein Teilstrom eines Stroms an Arbeitsmedium des Solarstrahlungsempfängers ist, wobei das Arbeitsmedium am Absorber Wärme aufnimmt.

43. Verfahren nach einem der Ansprüche 40 bis 42, **dadurch gekennzeichnet, daß** Arbeitsmedium des Solarstrahlungsempfängers, welches am Absorber Wärme aufnimmt, als Kühlungsfluid eingesetzt wird.

44. Verfahren nach einem der Ansprüche 40 bis 43, **dadurch gekennzeichnet, daß** der gesamte Arbeitsmediummassenstrom durch eine zwischen dem Eintrittsfenster und dem Absorber angeordnete Infrarotstrahlungsschildeinrichtung geführt wird.
